# EUROPÄISCHE PATENTSCHRIFT

(11) **EP 2 801 664 B1**
(45) Veröffentlichungstag und Bekanntmachung des Hinweises auf die Patenterteilung: **21.11.2018**
(21) Anmeldenummer: 14166468.0
(22) Anmeldetag: 29.04.2014
(51) Int. Cl.: E01C 23/088

(54) **Straßenfräsmaschine zum Bearbeiten von Straßen- oder Bodenoberflächen**
Road milling machine for machining road or ground surfaces
Fraiseuse routière destinée à traiter les surfaces routières et de sol

(30) Priorität: 08.05.2013 DE 102013208539
(43) Veröffentlichungstag der Anmeldung: 12.11.2014
(73) Patentinhaber: Wirtgen GmbH, 53578 Windhagen (DE)
(72) Erfinder: Berning, Christian, 50321 Brühl (DE); Thiel, Oliver, 53547 Hochscheid (DE); Lull, Roland, 53639 Königswinter (DE); Barimani, Cyrus, 53639 Königswinter (DE); Hähn, Günter, 53639 Königswinter (DE)
(74) Vertreter: dompatent von Kreisler Selting Werner - Partnerschaft von Patent- und Rechtsanwälten mbB

(56) Entgegenhaltungen:
- EP-A1- 0 836 659
- CN-U- 201 999 061
- DE-A1- 4 334 742
- DE-U1- 29 924 566
- US-A- 3 606 827

## Beschreibung

Die Erfindung betrifft eine Straßenfräsmaschine zum Bearbeiten von Straßen- oder Bodenoberflächen, sowie ein Verfahren zum Lenken der Straßenfräsmaschine nach dem Oberbegriff des Anspruchs 1 bzw. 15.

Derartige Straßenfräsmaschinen sind beispielsweise aus der EP 0 836 659 bekannt.

Bei derartigen Straßenbaumaschinen, insbesondere Kleinfräsen, kommt es in hohem Maße auf eine gute Manövrierbarkeit der Straßenfräsmaschine an. Beispielsweise soll eine derartige Straßenfräsmaschine nicht nur für Geradeausfahrt und normaler Kurvenfahrt geeignet sein, sondern auch engen Kurvenverläufen folgen können, z.B. um Verkehrsinseln herum oder um einen Kanaldeckel herum.

Daher schließt bei den bekannten Kleinfräsen die Fräswalze nahezu bündig mit einer Außenseite des Maschinenrahmens, der sogenannten Nullseite ab. Aufgrund dieser Anordnung ist es möglich, sehr nah an Hindernissen entlang zu fräsen. Auch ist es zu diesem Zweck bereits bekannt, das auf der Nullseite befindliche hintere Rad von einer äußeren Endposition in eine innere Endposition vor die Fräswalze relativ zur Nullseite nach innen zu verschwenken.

Der Möglichkeit auf dieser Nullseite sehr engen Kurvenverläufen zu folgen, kommt besondere Bedeutung zu, da somit um sehr kleine Hindernisse herum sehr genaue Fräsarbeiten ausgeführt werden können. Deshalb ist es bei derartigen Straßenfräsmaschinen bereits bekannt, die Lenkwinkel für eine Kurvenfahrt relativ zu dieser Nullseite nach innen bzw. nach außen unterschiedlich groß zu gestalten, insbesondere den Lenkwinkel für eine Kurvenfahrt nach außen besonders groß zu gestalten.

Es versteht sich, dass wenn die Manövrierfähigkeit verbessert wird, die Einsatzmöglichkeiten und die Wirtschaftlichkeit einer derartigen Straßenfräsmaschine verbessert werden können.

Die CN 201999061 U beschreibt ein Fahrgestell für einen Asphaltfertiger. Hierzu ist an der Straßenbaumaschine ein Vorderbau mit einem Vierrad-Allradantrieb vorgesehen. Ziel der Konstruktion ist, den Schlupf an dem Vorderbau zu verringern und eine gemeinsame Lenkung aller vier Räder mit einer herkömmlichen Spurstangenlenkung zu verwirklichen.

Die DE 43 34 742 und die US 3,606,827 zeigen jeweils nur ein Lagerauge zum Befestigen des freien Endes des Lenkzylinders. Dieses Lagerauge verschiebt eine Spurstange im Wesentlichen in Richtung ihrer Längserstreckung.

Der Erfindung liegt daher die Aufgabe zugrunde, die Manövrierfähigkeit für eine Straßenfräsmaschine, insbesondere für eine Kleinfräse, zu verbessern.

Zur Lösung dieser Aufgabe dienen die Merkmale des Anspruchs 1 bzw. 15.

Eine derartige Gestaltung des Verbindungsteils ermöglicht eine Vergrößerung des einstellbaren maximalen Lenkwinkels der Räder oder Kettenlaufwerke bei gleichzeitig kompakter Bauweise.

Bei einer Lenkung, bei der sich die Nullseite der Straßenfräsmaschine auf der Innenseite befindet, ist vorgesehen, dass die Radkonsolen über das Verbindungsteil derart gekoppelt sind, dass das Drehungszentrum beider vorderen Räder oder Kettenlaufwerke in der vertikalen Ebene der Hinterachse oder deren Verlängerung im Bereich des hinteren Rades oder Kettenlaufwerkes möglichst nahe an der Nullseite angeordnet ist.

Da die Fräswalzenachse in der gleichen vertikalen Ebene liegt wie die Hinterachse der hinteren Räder oder Kettenlaufwerke, ermöglicht dies das Fräsen mit der nullseitigen Stirnfläche der Fräswalze von engen Kurvenradien z.B. um Kanaldeckel herum.

Die Vergrößerung des maximal möglichen Lenkwinkels ermöglicht es den Abstand des aktuellen Drehungszentrums zur kurveninneren Stirnfläche der Fräswalze zu verkürzen, wodurch engere Kurvenradien fahrbar sind.

Dabei ist vorgesehen, dass sich der Arm des Lenkankers zwischen den Schwenksäulen der Räder oder Kettenlaufwerke von dem Verbindungsteil weg erstreckt, wobei das Verbindungsteil und der Lenkzylinder in Fahrtrichtung gesehen auf gegenüberliegenden Seiten relativ zu einer gedachten Verbindungslinie der Schwenkachsen angeordnet sind.

Vorzugsweise ist vorgesehen, dass die Räder oder Kettenlaufwerke zwischen zwei Lenkwinkel Endpositionen für eine Fahrtrichtung nach links bzw. rechts lenkbar sind, wobei das Verbindungsteil und/oder der Arm des Verbindungsteils gebogene Abschnitte oder Aussparungen aufweist, derart dass das Verbindungsteil und/oder der Arm in den Endpositionen einen Abstand von der jeweiligen Schwenkachse einhalten, der größer ist als der Radius der jeweiligen Schwenksäule.

Bei einer bevorzugten Ausführungsform steht der Arm des Lenkankers im Wesentlichen mittig von dem Verbindungsteil ab. Die zunächst mittige Anordnung des Arms hat den Vorteil, dass für einen größeren Bereich eine Kollisionsfreiheit relativ zu den Schwenksäulen ermöglicht wird. In Fahrtrichtung gesehen vor dem Bereich der Schwenksäulen kann der Arm gebogen oder abgewinkelt gestaltet sein.

Vorzugsweise ist vorgesehen, dass der von dem Verbindungsteil abstehende Arm des Lenkankers hinter den Schwenksäulen in etwa parallel zu dem Lenkzylinder verläuft und am dem freien Ende mit einem einzigen Lenkzylinder gelenkig verbunden ist. Dadurch befinden sich die jeweiligen Kraftangriffspunkte auf gegenüberliegenden Seiten relativ zu den Schwenksäulen.

Vorzugsweise ist vorgesehen, dass der von dem Verbindungsteil abstehende Arm eine Breite aufweist, die im Bereich zwischen dem 0,5- und dem 0,97-fachen , vorzugsweise zwischen dem 0,75- und dem 0,95-fachen, der Differenz zwischen dem Abstand der Schwenkachsen und dem zweifachen Radius der Schwenksäulen liegt.

Die Lenkhebel können in Relation zur Fahrtrichtung unter unterschiedlichen Winkelstellungen an den Schwenksäulen angeordnet sein, derart, dass sich für eine Lenkrichtung nach rechts oder links unterschiedliche maximale Lenkwinkel ergeben.

Die Schwenksäulen der Vorderachse können in einem Querträger gelagert sein.

Der Festpunkt des Lenkzylinders ist vorzugsweise an dem Maschinenrahmen oder an dem Querträger angeordnet.

Bei einer bevorzugten Ausführungsform kann der Querträger relativ zu dem Maschinenrahmen um eine in Fahrtrichtung verlaufende Pendelachse schwenkbar sein. Auf diese Weise können die Räder oder Kettenlaufwerke der Vorderachse auch auf unterschiedlichen Ebenen laufen.

Vorzugsweise ist vorgesehen, dass das auf der Nullseite befindliche hintere Rad von einer äußeren Endposition, in der sich das Rad jenseits der Nullseite befindet und die Hinterachsen beider hinterer Räder miteinander fluchten, in eine innere Endposition vor die Fräswalze relativ zur Nullseite nach innen schwenkbar ist.

Es kann vorgesehen sein, dass zumindest das auf der Nullseite befindliche hintere Rad lenkbar ist.

Die Lenkbarkeit ggf. beider hinterer Räder, aber zumindest des auf der Nullseite befindlichen hinteren Rades, verbessert ebenfalls die Manövrierbarkeit der Straßenfräsmaschine. Sie ist besonders vorteilhaft, wenn Kettenlaufwerke zum Einsatz kommen.

Bei einem besonders bevorzugten Ausführungsbeispiel ist vorgesehen, dass die Räder oder Kettenlaufwerke der Vorderachse in Fahrtrichtung derart versetzt zueinander angeordnet sind, dass das in Lenkrichtung auf der inneren Seite befindliche Rad oder das auf der Nullseite befindliche Rad oder Kettenlaufwerk in Fahrtrichtung vor dem benachbarten Rad oder Kettenlaufwerk angeordnet ist.

Die versetzte Anordnung der Räder bzw. der Kettenlaufwerke hat den Vorteil, dass die Lenkgeometrie aufgrund des Versatzes die Einstellung größerer maximaler Lenkwinkel ermöglicht, so dass ein enger Kurvenradius gefahren werden kann. Diese Verbesserung ist insbesondere bei einer Kurvenfahrt, auf der sich die Nullseite auf der Innenseite befindet, von großem Vorteil.

Letztlich ermöglicht der Versatz der Vorderräder eine Angleichung der Kurvenradien beider vorderen Räder bei gleichzeitiger Verringerung des Abstandes des momentanen Drehungszentrums von der Stirnseite der Fräswalze. Bei einer Angleichung der Kurvenradien für beide vorderen Räder ist eine genauere Kurvenfahrt möglich und durch die Verkürzung des Drehungsmittelpunktes zur z.B. nullseitigen Stirnseite der Fräswalze können engste Kurvenradien bis zu 130 mm Kurvenradius und weniger erreicht werden. Insofern kann sich die Straßenfräsmaschine praktisch auf der Stelle drehen.

Die Erfindung ermöglicht es auch im Falle einer notwendigen Verlängerung des Radstandes eine bessere Manövrierfähigkeit der Straßenfräsmaschine als zuvor zu erreichen.

Eine Verlängerung des Radstandes kann unter anderem aufgrund der Verwendung neuer und aufwändigerer Motorentechnologie, oder der Integration von zusätzlichen Komponenten, wie zum Beispiel zur Abgasnachbehandlung notwendig werden. Diese Komponenten benötigen zusätzlichen Bauraum, sind aber notwendig, um Emissionsrichtlinien zu genügen.

Vorzugsweise ist vorgesehen, dass der Versatz in Fahrtrichtung zwischen den Schwenkachsen der Vorderachse zwischen 50 mm und 350 mm, vorzugsweise zwischen 100 mm und 250 mm, beträgt. Ein derartiger Versatz der Anordnung der Schwenkachsen der Räder oder Kettenlaufwerke an der Vorderachse erlaubt eine erhebliche Erhöhung der maximalen Lenkwinkel.

Vorzugsweise ist vorgesehen, dass der Lenkwinkel nach außen für das auf der Nullseite befindliche Rad oder Kettenlaufwerk bis zu einem maximalen Lenkwinkel von über 70°, vorzugsweise zwischen 70° und 90°, einstellbar ist.

Bei einem bevorzugten Ausführungsbeispiel ist vorgesehen, dass der Versatz der Räder oder Kettenlaufwerke der Vorderachse derart gewählt ist, dass die Räder oder Kettenlaufwerke in der Lenkrichtung relativ zur Nullseite nach außen beide in einer Spur laufen.

Dies hat den Vorteil, dass die Straßenfräsmaschine auf der Stelle, d.h. im Wesentlichen um das momentane Drehzentrum gedreht werden kann, so dass äußerst enge Kurvenradien gefräst werden können. Darüber hinaus ermöglicht diese Anordnung eine genauere Kurvenfahrt.

Bei einem weiteren Ausführungsbeispiel kann vorgesehen sein, dass der Querträger um eine vertikale Achse schwenkbar ist. Dies ermöglicht es den Versatz der vorderen Räder wahlweise auf der Nullseite oder auf der der Nullseite gegenüberliegenden Seite vorzusehen, so dass jeweils das in Lenkrichtung innenseitige Rad vor dem benachbarten Rad angeordnet werden kann. Auf diese Weise kann erreicht werden, dass auch bei einer Lenkrichtung relativ zur Nullseite nach links die Kurvenradien der vorderen Räder aneinander angeglichen werden, wodurch der Abstand zwischen der der Nullseite abgewandten Stirnseite der Fräswalze und dem Drehungszentrum in Form einer im wesentlichen orthogonal zu der Bodenoberfläche verlaufenden Drehungsachse ebenfalls weiter verkürzt werden kann.

Vorzugsweise ist vorgesehen, dass die Radkonsolen über das Verbindungsteil derart gekoppelt sind, dass das Drehungszentrum bei einer Lenkung relativ zur Nullseite nach außen einen Abstand von der äußeren Stirnseite der Fräswalze von weniger als 250 mm, vorzugsweise weniger als 150 mm, aufweist.

Bei einer Kurvenfahrt, bei der die Nullseite außen verläuft, ist vorgesehen, dass die Radkonsolen über das Verbindungsteil derart gekoppelt sind, dass bei einer Lenkung relativ zur Nullseite nach innen das Drehungszentrum beider vorderen Räder oder Kettenlaufwerke auf der Verlängerung der Hinterachse einen Abstand von der inneren Stirnkante der Fräswalze aufweist, der geringer ist als der Radstand, vorzugsweise geringer als 2000 mm.

Im Folgenden werden unter Bezugnahme auf die Zeichnungen Ausführungsbeispiele der Erfindung näher erläutert.

Es zeigen:
- Fig. 1: eine gattungsgemäße Straßenfräsmaschine nach dem Stand der Technik,
- Fig. 2: eine Draufsicht auf die Straßenfräsmaschine der Fig. 1,
- Fig. 3: eine Draufsicht auf ein Ausführungsbeispiel eines Lenkankers,
- Fig. 4: eine Seitenansicht der Vorderachse,
- Fig. 5: eine schematische Darstellung der Lenkwinkel bei einer Straßenfräsmaschine gemäß Fig. 1,
- Fig. 6: eine schematische Darstellung der einstellbaren Lenkwinkel bei einem ersten Ausführungsbeispiel der Erfindung, und
- Fig. 7: eine schematische Darstellung der einstellbaren Lenkwinkel bei einem weiteren Ausführungsbeispiel der Erfindung.

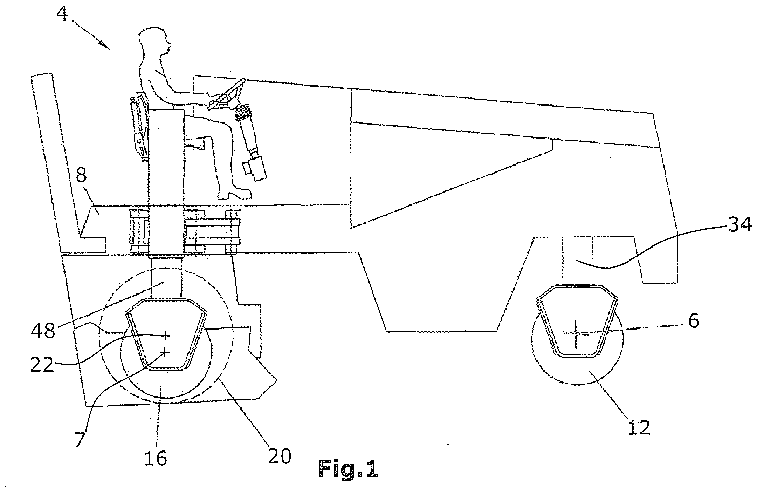

Fig. 1 zeigt eine Straßenfräsmaschine zum Abfräsen von Fahrbahnen mit einem selbstfahrenden Fahrwerk bestehend aus einer lenkbaren Vorderachse 6 mit zwei vorderen Rädern 10, 12 und zwei voneinander unabhängigen hinteren Rädern 14, 16. Es versteht sich, dass die Räder 10 bis 16 vollständig oder teilweise durch Kettenlaufwerke ersetzt werden können.

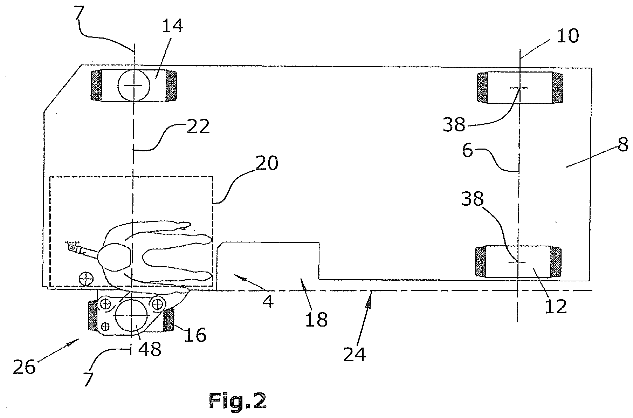

Das Fahrwerk trägt einen Maschinenrahmen 8, auf dem sich ein Fahrerstand 4 auf der sogenannten Nullseite 24 der Straßenbaumaschine gemäß Fig. 2 befindet. Die hinteren Räder 14, 16 sind mit Hilfe von Hubsäulen 48 höhenverstellbar, um damit die Arbeitstiefe einer Fräswalze 20 einstellen zu können.

Die Fräswalze 20 ist mit der nullseitigen Stirnseite nahezu bündig mit der Nullseite 24 des Maschinenrahmens, so dass auf der Nullseite 24 der Straßenfräsmaschine ein kantennahes Arbeiten möglich ist. Hierzu wird das Rad 16 aus einer äußeren Endposition 26 jenseits der Nullseitenebene nach innen vor die Fräswalze in eine Aussparung 18 des Maschinenrahmens 8 eingeschwenkt, so dass die Außenkante des Rades 16 bündig mit der Nullseite 24 abschließen kann oder sogar relativ zur Nullseite 24 eine Endposition weiter innen einnehmen kann. Das hintere Rad 16 oder beide hinteren Rader 14, 16 können lenkbar sein.

Die Fräswalzenachse 22 verläuft, wie am besten aus Fig. 1 ersichtlich, im Wesentlichen in der gleichen vertikalen Ebene, wie die Achsen 7 des Rades 14 und des Rades 16 in der äußeren Endposition 26.

Der Eingriffskreis der Fräswalze 20 endet in der Nähe des hinteren Endes des Maschinenrahmens 8, so dass bis in Ecken kantennah gefräst werden kann.

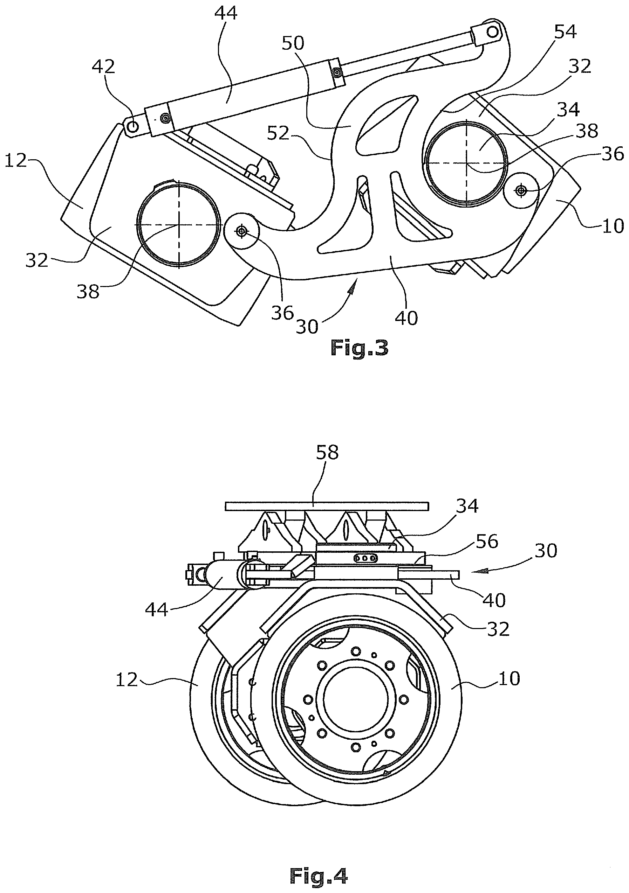

Fig. 3 zeigt einen Lenkanker 30 mit einem Verbindungsteil 40, das die Lenkhebel 36 beider vorderen Räder 10, 12 miteinander gelenkig verbindet. Von diesem Verbindungsteil 40 steht ein Arm 50 zunächst im Wesentlichen mittig und vorzugsweise orthogonal zu dem Verbindungsteil 40 ab.

Die Radkonsolen 32 sind jeweils mit Schwenksäulen 34 verbunden, die um jeweils eine Schwenkachse 38 in einem Querträger 56 schwenkbar gelagert sind.

Die Lenkhebel 36 sind fest mit den Radkonsolen 32 verbunden.

Der im Wesentlichen orthogonal von dem Verbindungsteil 40 abstehende Arm 50 weist auf den den Schwenksäulen 34 zugewandten Seiten eine gebogene Kontur 52, 54 auf, die dem Durchmesser der Schwenksäulen 34 angepasst ist, um kollisionsfrei maximale Lenkwinkel einstellen zu können.

Oberhalb einer gedachten Verbindungslinie zwischen den Schwenkachsen 38 der Schwenksäulen kann der Arm 50 abgewinkelt oder gebogen sein, um an seinem freien Ende mit einem Lenkzylinder 44 verbunden zu sein, der die zum Lenken erforderliche Kraft auf den Lenkanker 30 überträgt. Der Lenkzylinder 44 ist seinerseits an einem Festpunkt 42 direkt oder indirekt relativ zum Maschinenrahmen 4 angelenkt.

Fig. 4 zeigt eine Seitenansicht der Vorderachse mit zueinander versetzten Rädern 10, 12, deren Schwenksäulen 34 in einem Querträger 56 gelagert sind.

Der Querträger 56 ist an einer am Maschinenrahmen 8 befestigten Platte 58 derart angelenkt, dass der Querträger 56 relativ zu dem Maschinenrahmen 8 um eine in Fahrtrichtung verlaufende Pendelachse schwenkbar sein kann.

Bei einer alternativen Ausführungsform kann auch vorgesehen sein, dass der Querträger 56 um eine vertikale zu den Schwenkachsen 38 parallele Achse derart schwenkbar ist, dass der Versatz "d" wahlweise in Fahrtrichtung links oder rechts vorgesehen werden kann, so dass jeweils das in Lenkrichtung innenseitige Rad 10 oder 12 in Fahrtrichtung vor dem benachbarten Rad angeordnet werden kann.

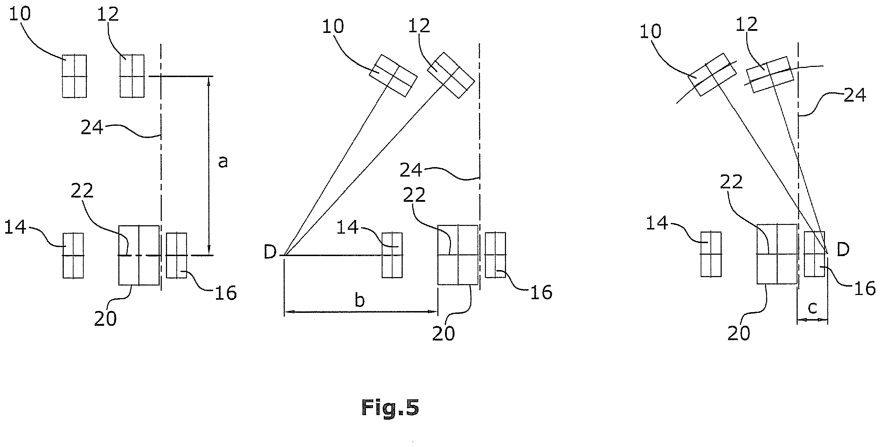

Fig. 5 zeigt ein Ausführungsbeispiel aus dem Stand der Technik mit den für den Fräsbetrieb relevanten geometrischen Abständen. In der linken Abbildung der Fig. 5 ist der Radstand "a" der Straßenfräsmaschine anzeigt. In der mittleren Abbildung ist als für den Fräsbetrieb relevante Größe der Abstand "b" des Drehungszentrums "D" von der der Nullseite abgewandten Stirnseite der Fräswalze 20 bei maximalem Lenkwinkel nach links gezeigt.

Die rechte Abbildung der Fig. 5 zeigt die gleiche Situation bei maximalem Lenkwinkel nach rechts, bei der die Nullseite 24 auf der kurveninneren Seite liegt. Hier ist nicht nur der maximal einstellbare Lenkwinkel der vorderen Räder 10, 12 von großer Bedeutung, sondern auch der Abstand "c" vom Drehungszentrum D zur nullseitigen Stirnseite der Fräswalze 20. Es versteht sich, dass bei einem kleineren Abstand "c" engere Kurvenradien gefräst werden können. Desweiteren ist auch die Verkürzung des Abstandes "b" oder eine ggf. notwendige Vergrößerung des Radstandes "a" bei gleichzeitiger Verkleinerung der Abstände "b" und "c" wünschenswert.

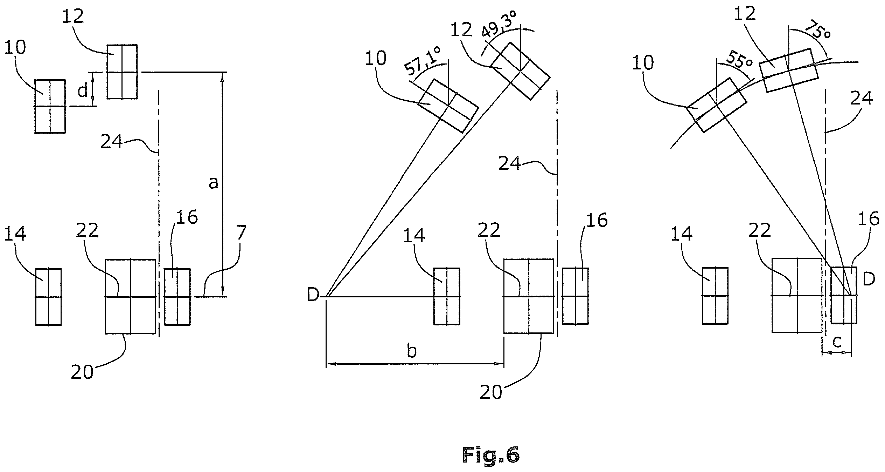

Fig. 6 zeigt nun ein Ausführungsbeispiel der Erfindung, bei dem die vorderen Räder 10, 12 zueinander versetzt angeordnet sind. Bei dem rechten vorderen Rad 12 ist der Radstand "a" beibehalten, während das linke vordere Rad 10 um einen Versatz "d" zurückversetzt ist. Der Versatz "d" kann beispielsweise in einem Bereich zwischen 50 mm bis 350 mm, vorzugsweise zwischen 100 mm bis 250 mm, liegen.

Dieser Versatz hat zunächst den aus der mittleren Abbildung der Fig. 6 ersichtlichen Vorteil, dass der Lenkwinkel des rechten vorderen Rades 12 vergrößert werden kann, wodurch der Abstand "b" zwischen dem Drehungszentrum und der linken Stirnseite der Fräswalze 20 erheblich verkürzt werden kann, so dass auch die Manövrierbarkeit der Straßenfräsmaschine nach innen relativ zur Nullseite 24 verbessert wird.

In der rechten Abbildung der Fig. 6 ist erkennbar, dass der maximale Lenkwinkel auf beispielsweise 75° aufgrund der versetzten Anordnung der vorderen Räder 10, 12 vergrößert werden kann, wodurch der Abstand "c" des Drehungszentrums "D" zu der nullseitigen Stirnfläche der Fräswalze 20 erheblich, d.h. um ca. 20 % gegenüber Fig. 5, verringert werden kann.

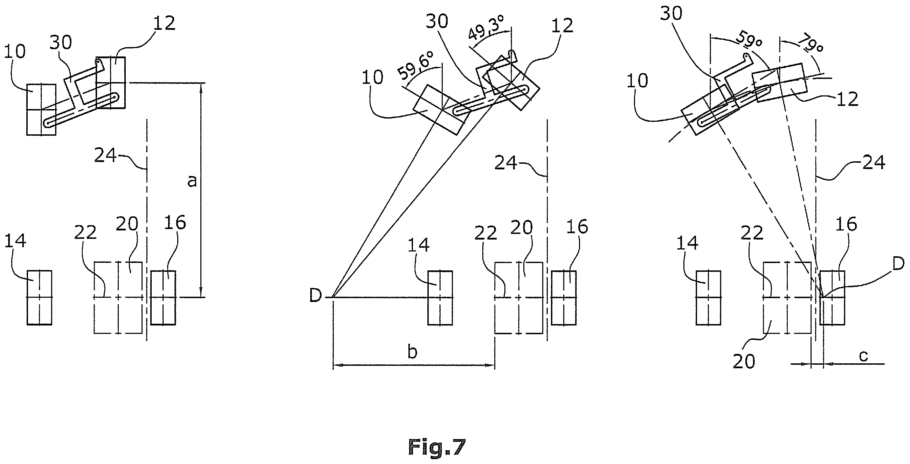

Fig. 7 zeigt zusätzlich zum Versatz "d" der vorderen Räder 10, 12 die Anwendung eines Lenkankers 30, der, wie aus der mittleren Abbildung der Fig. 7 hervorgeht, zumindest bezüglich des linken Rades 10 einen größeren Lenkwinkel zulässt, so dass der Abstand "b" gegenüber Fig. 4 weiter verringert werden kann.

Bei einer Lenkung nach rechts können an beiden vorderen Rädern 10, 12 die Lenkwinkel weiter vergrößert werden, so dass der Abstand "c" um ca. 65 % gegenüber Fig. 5 verringert werden kann, wodurch extrem kleine Kurvenradien bei einer Lenkung relativ zur Nullseite nach rechts fräsbar sind. Der Abstand "c" erreicht eine Größe von unter 150 mm. Für "b" ist ein Wert von beispielsweise ca. 1700 mm erreichbar.

Ein weiterer Vorteil der Ausführungsformen gemäß Fig. 6 und 7 ist, dass die vorderen Räder 10, 12 bei einem maximalen Lenkeinschlag von der Nullseite aus gesehen nach außen auf einem in etwa gleichartigen Radius gefahren werden können, so dass die Räder 10, 12 im Wesentlichen auf der gleichen Spur fahren.

Dies hat den Vorteil einer genaueren Kurvenfahrt.

Es sind maximale Lenkwinkel von über 70°, vorzugsweise zwischen 70° und 90°, einstellbar.

In dem Ausführungsbeispiel der Fig. 6 sind Lenkwinkel für die vorderen Räder 10, 12 zwischen 55° und 75° gezeigt und in dem Ausführungsbeispiel der Fig. 7 sind Lenkwinkel der vorderen Räder zwischen 59° und 79° ersichtlich.

## Patentansprüche

1. Straßenfräsmaschine zum Bearbeiten von Straßen- oder Bodenoberflächen,
- mit einem von einem Fahrwerk getragenen Maschinenrahmen (8) mit einer Vorder- und einer Hinterachse (6,7) mit Rädern (10, 12, 14, 16) oder Kettenlaufwerken,
- mit einem am Maschinenrahmen (8), zwischen den hinteren Rädern (14, 16) oder Kettenlaufwerken, drehbar gelagerten Fräswalze (20), wobei die Fräswalze (20) mit einer Stirnseite nahezu bündig mit einer seitlichen Außenseite des Maschinenrahmens (8), der sogenannten Nullseite (24), abschließt, um ein möglichst nahes Fräsen entlang von Hindernissen zu ermöglichen,
- wobei zumindest die Räder (14, 16) oder Kettenlaufwerke der Hinterachse (7) Radkonsolen mit Hubsäulen (48) aufweisen, die zur Einstellung der Frästiefe relativ zum Maschinenrahmen (8) in der Höhe einstellbar sind,
- wobei zumindest die Räder (10, 12) oder Kettenlaufwerke der Vorderachse (6) Radkonsolen (32) mit Schwenksäulen (34) aufweisen, die mit Hilfe von Lenkhebeln (36) um eine Schwenkachse (38) lenkbar sind,
- wobei die Lenkhebel (36) der Räder (10, 12) oder Kettenlaufwerke der Vorderachse (6) über ein starres Verbindungsteil (40) zur synchronen Verstellung der Lenkwinkel gelenkig miteinander gekoppelt sind, und
- wobei mindestens ein an einem Festpunkt (42) relativ zum Maschinenrahmen (8) direkt oder indirekt angelenkter und mit mindestens einer Radkonsole (32) mittelbar oder unmittelbar gekoppelter Lenkzylinder (44) den Lenkwinkel der Räder (10, 12) oder Kettenlaufwerke einstellt,
**dadurch gekennzeichnet, dass**
das Verbindungsteil (40) gemeinsam mit einem von dem Verbindungsteil (40) abstehenden Arm (50) einen Lenkanker (30) bildet, dessen Arm (50) sich zwischen den Schwenksäulen (34) von dem Verbindungsteil (40) weg erstreckt, und der an seinem freien Ende mit mindestens einem Lenkzylinder (44) gekoppelt ist, wobei das Verbindungsteil (40) und der Lenkzylinder (44) in Fahrtrichtung gesehen auf gegenüberliegenden Seiten relativ zu der Verbindungslinie der Schwenkachsen (38) angeordnet sind.

2. Vorrichtung nach Anspruch 1, **dadurch gekennzeichnet, dass** die Räder (10, 12) oder Kettenlaufwerke zwischen zwei Endpositionen für eine Fahrtrichtung nach links bzw. rechts lenkbar sind, wobei das Verbindungsteil und/oder der Arm (50) des Verbindungsteils (40) gebogene Abschnitte oder Aussparungen (52, 54) aufweist, derart dass das Verbindungsteil (40) und/oder der Arm (50) in den Endpositionen einen Abstand von der jeweiligen Schwenkachse (38) einhält, der größer ist als der Radius der jeweiligen Schwenksäule (34).

3. Vorrichtung nach einem der Ansprüche 1 oder 2, **dadurch gekennzeichnet, dass** der Arm (50) des Lenkankers (30) im Wesentlichen mittig von dem Verbindungsteil (40) absteht.

4. Vorrichtung nach einem der Ansprüche 1 bis 3, **dadurch gekennzeichnet, dass** der von dem Verbindungsteil (40) abstehende Arm (50) des Lenkankers (30) vom Verbindungsteil (40) aus gesehen hinter den Schwenksäulen (34) in etwa parallel zu dem Lenkzylinder (44) verläuft und am dem freien Ende mit einem einzigen Lenkzylinder (44) gelenkig verbunden ist.

5. Vorrichtung nach einem der Ansprüche 1 bis 4, **dadurch gekennzeichnet, dass** der Lenkanker (30) im Bereich des von dem Verbindungsteil (40) abstehenden Arms (50) beidseitig den Schwenksäulen (34) zugewandte Aussparungen (52, 54) aufweist, die an den Radius der Schwenksäulen (34) angepasst sind.

6. Vorrichtung nach einem der Ansprüche 1 bis 5, **dadurch gekennzeichnet, dass** der von dem Verbindungsteil (40) abstehende Arm (50) eine Breite aufweist, die im Bereich zwischen dem 0,5- und dem 0,97-fachen , vorzugsweise zwischen dem 0,75- und dem 0,95-fachen, der Differenz zwischen dem Abstand der Schwenkachsen (38) und dem zweifachen Radius der Schwenksäulen (34) liegt.

7. Vorrichtung nach einem der Ansprüche 1 bis 6, **dadurch gekennzeichnet, dass** die Lenkhebel (36) in Relation zur Fahrtrichtung unter unterschiedlichen Winkelstellungen an den Schwenksäulen (34) angeordnet sind, derart dass sich für eine Lenkrichtung nach rechts oder links unterschiedliche maximale Lenkwinkel ergeben.

8. Vorrichtung nach einem der Ansprüche 1 bis 7, **dadurch gekennzeichnet, dass** die Schwenksäulen (34) zumindest der Vorderachse (6) in einem Querträger (56) gelagert sind.

9. Vorrichtung nach Anspruch 8, **dadurch gekennzeichnet, dass** der Festpunkt (42) des Lenkzylinders (44) an dem Maschinenrahmen (4) oder an dem Querträger (56) angeordnet ist.

10. Vorrichtung nach Anspruch 8 oder 9, **dadurch gekennzeichnet, dass** der Querträger (56) relativ zu dem Maschinenrahmen (8) um eine in Fahrtrichtung verlaufende Pendelachse schwenkbar ist.

11. Vorrichtung nach einem der Ansprüche 1 bis 10, **dadurch gekennzeichnet, dass** die Räder (10, 12) oder Kettenlaufwerke der Vorderachse in Fahrtrichtung versetzt zueinander angeordnet sind.

12. Vorrichtung nach Anspruch 11, **dadurch gekennzeichnet, dass** das in Lenkrichtung innenseitige Rad (10, 12) oder Kettenlaufwerk oder das auf der Nullseite befindliche Rad (10,12) oder Kettenlaufwerk der Vorderachse in Fahrtrichtung vor dem benachbarten Rad (10, 12) oder Kettenlaufwerk angeordnet ist.

13. Vorrichtung nach Anspruch 12, **dadurch gekennzeichnet, dass** der Querträger (56) um eine vertikale Achse schwenkbar ist.

14. Vorrichtung nach einem der Ansprüche 1 bis 13, **dadurch gekennzeichnet, dass** das auf der Nullseite (24) befindliche hintere Rad (16) von einer äußeren Endposition (26), in der sich das Rad (16) jenseits der Nullseite (24) befindet und die Hinterachsen (7) beider hinterer Räder (14,16) im Wesentlichen miteinander fluchten, in eine innere Endposition vor die Fräswalze (20) und relativ zur Nullseite (24) nach innen schwenkbar ist.

15. Verfahren zum Lenken einer Straßenfräsmaschine zum Bearbeiten von Straßen- oder Bodenoberflächen,
- mit einer Vorder- und einer Hinterachse (6,7) mit Rädern (10, 12, 14, 16) oder Kettenlaufwerken,
- mit einer zwischen den hinteren Rädern (14, 16) oder Kettenlaufwerken drehbar gelagerten Fräswalze (20), wobei zum möglichst nahen Fräsen entlang von Hindernissen die Fräswalze (20) mit einer Stirnseite nahezu bündig mit einer seitlichen Außenseite des Maschinenrahmens (8), der sogenannten Nullseite (24), abschließt,
- wobei zumindest die Räder (14, 16) oder Kettenlaufwerke der Hinterachse (7) Radkonsolen mit Hubsäulen (48) aufweisen, die zur Einstellung der Frästiefe relativ zum Maschinenrahmen (8) in der Höhe einstellbar sind,
- wobei zumindest die Räder (10, 12) oder Kettenlaufwerke der Vorderachse (6) mit Hilfe von Lenkhebeln (36) um eine Schwenkachse (38) gelenkt werden,
- indem die Lenkhebel (36) der Räder (10, 12) oder Kettenlaufwerke über ein starres Verbindungsteil (40) zur synchronen Verstellung der Lenkwinkel gelenkig miteinander gekoppelt werden, und
- wobei über mindestens einen an einem Festpunkt (42) relativ zum Maschinenrahmen direkt oder indirekt angelenkten mittelbar oder unmittelbar mit dem Verbindungsteil (40) gekoppelten Lenkzylinder (44) die Lenkwinkel der Räder (10, 12) oder Kettenlaufwerke eingestellt werden
**dadurch gekennzeichnet, dass**
zur Vergrößerung der maximal einstellbaren Lenkwinkel der Räder (10, 12) oder Kettenlaufwerke der Vorderachse (6) ein aus dem Verbindungsteil (40) gemeinsam mit einem von dem Verbindungsteil (40) abstehenden Arm (50) gebildeter Lenkanker (30) verwendet wird, dessen Arm (50) sich zwischen den Schwenksäulen (34) erstreckt und mit seinem freien Ende mit mindestens einem Lenkzylinder (44) gekoppelt wird, wobei das Verbindungsteil (40) und der Lenkzylinder (44) in Fahrtrichtung gesehen auf gegenüberliegenden Seiten relativ zu der Verbindungslinie der Schwenkachsen (38) angeordnet werden.

## Claims

1. Road milling machine for working road or ground surfaces,
- with a machine frame (8) supported by a chassis with one front axle and one rear axle (6, 7) with wheels (10, 12, 14, 16) or crawler tracks,
- with a milling drum (20) mounted at the machine frame (8) to rotate between the rear wheels (14, 16) or crawler tracks, where said milling drum (20), with one front end, ends nearly flush with a lateral outer side of the machine frame (8), the so-called zero-clearance side (24), in order to enable milling as close along any obstacles as possible,
- where, as a minimum, the wheels (14, 16) or crawler tracks of the rear axle (7) comprise wheel brackets with lifting columns (48) which are adjustable in height relative to the machine frame (8) for the purpose of adjusting the milling depth,
- where, as a minimum, the wheels (10, 12) or crawler tracks of the front axle (6) comprise wheel brackets (32) with pivoting columns (34) which are steerable about a pivoting axis (38) by means of steering levers (36),
- where the steering levers (36) of the wheels (10, 12) or crawler tracks of the front axle (6) are coupled to one another in an articulated fashion via a rigid connecting part (40) for synchronous adjustment of the steering angles, and
- where, as a minimum, one steering cylinder (44) directly or indirectly articulated at a fixed point (42) relative to the machine frame (8) and directly or indirectly coupled with, as a minimum, one wheel bracket (32) adjusts the steering angle of the wheels (10, 12) or crawler tracks,
**characterized in that**
the connecting part (40) forms a steering tie rod (30) together with an arm (50) projecting from the connecting part (40), where the arm (50) of said steering tie rod extends between the pivoting columns (34) away from the connecting part (40) and is coupled at its free end to at least one steering cylinder (44), with the connecting part (40) and the steering cylinder (44) being arranged on opposite sides, as seen in the direction of travel, relative to the connecting line of the pivoting axes (38).

2. Device in accordance with claim 1, **characterized in that** the wheels (10, 12) or crawler tracks are steerable between two end positions for a direction of travel to the left or to the right, with the connecting part and/or the arm (50) of the connecting part (40) exhibiting curved sections or cut-outs (52, 54) in such a fashion that, in the end positions, the connecting part (40) and/or the arm (50) maintains a distance from the respective pivoting axis (38) that is larger than the radius of the respective pivoting column (34).

3. Device in accordance with one of claims 1 or 2, **characterized in that** the arm (50) of the steering tie rod (30) projects essentially centrally from the connecting part (40).

4. Device in accordance with one of claims 1 to 3, **characterized in that** the arm (50) of the steering tie rod (30) projecting from the connecting part (40) extends behind the swivelling columns (34) in an approximately parallel fashion to the steering cylinder (44) as seen from the connecting part (40) and, at the free end, is connected in an articulated fashion to a single steering cylinder (44).

5. Device in accordance with one of claims 1 to 4, **characterized in that** the steering tie rod (30), in the area of the arm (50) projecting from the connecting part (40), features cut-outs (52, 54) on both sides which face the pivoting columns (34) and are adapted to the radius of the pivoting columns (34).

6. Device in accordance with one of claims 1 to 5, **characterized in that** the arm (50) projecting from the connecting part (40) features a width that ranges between the 0.5-fold and 0.97-fold, preferably between the 0.75-fold and 0.95-fold of the difference between the distance of the pivoting axes (38) and the twofold radius of the pivoting columns (34).

7. Device in accordance with one of claims 1 to 6, **characterized in that** the steering levers (36) are arranged at the pivoting columns (34) in different angular positions relative to the direction of travel in such a fashion that different maximum steering angles result for a steering direction to the right or to the left.

8. Device in accordance with one of claims 1 to 7, **characterized in that** the pivoting columns (34) of, as a minimum, the front axle (6) are mounted in a cross member (56).

9. Device in accordance with claim 8, **characterized in that** the fixed point (42) of the steering cylinder (44) is arranged at the machine frame (4) or at the cross member (56).

10. Device in accordance with claim 8 or 9, **characterized in that** the cross member (56) is pivotable, relative to the machine frame (8), about a swing axle extending in the direction of travel.

11. Device in accordance with one of claims 1-10, **characterized in that** the wheels (10, 12) or crawler tracks of the front axle are arranged offset to one another as seen in the direction of travel.

12. Device in accordance with claim 11, **characterized in that** the wheel (10, 12) or crawler track located on the inside relative to the steering direction, or the wheel (10, 12) or crawler track of the front axle located on the zero-clearance side is arranged in front of the neighbouring wheel (10, 12) or crawler track as seen in the direction of travel.

13. Device in accordance with claim 12, **characterized in that** the cross member (56) is pivotable about a vertical axis.

14. Device in accordance with one of claims 1 to 13, **characterized in that** the rear wheel (16) located on the zero-clearance side (24) is pivotable inwards, relative to the zero-clearance side (24), from an outer end position (26) in which the wheel (16) is beyond the zero-clearance side (24) and the rear axles (7) of both rear wheels (14, 16) are essentially in alignment, to an inner end position in front of the milling drum (20).

15. Method for steering a road milling machine for working road or ground surfaces,
- with one front axle and one rear axle (6, 7) with wheels (10, 12, 14, 16) or crawler tracks,
- with a milling drum (20) mounted to rotate between the rear wheels (14, 16) or crawler tracks, where, in order to enable milling as close along any obstacles as possible, said milling drum (20), with one front end, ends nearly flush with a lateral outer side of the machine frame (8), the so-called zero-clearance side (24),
- where, as a minimum, the wheels (14, 16) or crawler tracks of the rear axle (7) comprise wheel brackets with lifting columns (48) which are adjustable in height relative to the machine frame (8) for the purpose of adjusting the milling depth,
- where, as a minimum, the wheels (10, 12) or crawler tracks of the front axle (6) are steerable about a pivoting axis (38) by means of steering levers (36),
- by the steering levers (36) of the wheels (10, 12) or crawler tracks of the front axle (6) being coupled to one another in an articulated fashion via a rigid connecting part (40) for synchronous adjustment of the steering angles, and
- where the steering angle of the wheels (10, 12) or crawler tracks are adjusted via, as a minimum, one steering cylinder (44) directly or indirectly articulated at a fixed point (42) relative to the machine frame and directly or indirectly coupled with the connecting part (40),
**characterized in that**
for increasing the maximum adjustable steering angle of the wheels (10, 12) or crawler tracks of the front axle (6), a steering tie rod (30) is used that is formed by the connecting part (40) together with an arm (50) projecting from the connecting part (40), where the arm (50) extends between the pivoting columns (34) and is coupled at its free end to at least one steering cylinder (44), with the connecting part (40) and the steering cylinder (44) being arranged on opposite sides, as seen in the direction of travel, relative to the connecting line of the pivoting axes (38).

## Revendications

1. Machine à fraiser la chaussée destinée au traitement de surfaces de routes ou de sols,
- avec un cadre de machine (8) porté par un châssis avec un essieu avant et un essieu arrière (6, 7) avec des roues (10, 12, 14, 16) ou des chenilles,
- avec un tambour de fraisage (20) supporté en rotation sur le cadre de machine (8), entre les roues arrière (14, 16) ou les chenilles, le tambour de fraisage (20) se terminant par un côté frontal presque en affleurement avec un côté extérieur latéral du cadre de machine (8), appelé côté zéro (24), pour permettre un fraisage le plus rapproché possible le long d'obstacles,
- au moins les roues (14, 16) ou les chenilles de l'essieu arrière (7) comportant des consoles de roues avec des colonnes de levage (48) qui sont réglables en hauteur pour le réglage de la profondeur de fraisage par rapport au cadre de machine (8),
- au moins les roues (10, 12) ou les chenilles de l'essieu avant (6) comportant des consoles de roues (32) avec des colonnes de pivotement (34) qui peuvent être dirigées à l'aide de leviers de direction (36) autour d'un axe de pivotement (38),
- les leviers de direction (36) des roues (10, 12) ou des chenilles de l'essieu avant (6) étant couplés les uns avec les autres de façon articulée par le biais d'une partie de raccordement (40) rigide pour le réglage synchrone des angles de braquage, et
- au moins un cylindre de direction (44) articulé indirectement ou directement sur un point fixe (42) par rapport au cadre de machine (8) et couplé indirectement ou directement avec au moins une console de roue (32) réglant l'angle de braquage des roues (10, 12) ou des chenilles,
**caractérisée en ce que**,
conjointement avec un bras (50) dépassant de la partie de raccordement (40), la partie de raccordement (40) forme une ancre de direction (30) dont le bras (50) s'étend entre les colonnes de pivotement (34) en s'éloignant de la partie de raccordement (40) et qui est, à son extrémité libre, couplé avec au moins un vérin de direction (44), la partie de raccordement (40) et le vérin de direction (44) étant, vu dans le sens de la marche, disposés sur des côtés opposés par rapport à la ligne de raccordement des axes de pivotement (38).

2. Dispositif selon la revendication 1, **caractérisé en ce que** les roues (10, 12) ou les chenilles peuvent être dirigées entre deux positions extrêmes pour un sens de la marche vers la gauche ou respectivement vers la droite, la partie de raccordement et/ou le bras (50) de la partie de raccordement (40) comportant des tronçons courbés ou évidements (52, 54) de telle sorte que la partie de raccordement (40) et/ou le bras (50) conserve dans les positions extrêmes une distance à l'axe de pivotement (38) respectif qui est plus grande que le rayon de la conduite de la colonne de pivotement (34) respective.

3. Dispositif selon l'une des revendications 1 ou 2, **caractérisé en ce que** le bras (50) de l'ancre de direction (30) dépasse de la partie de raccordement (40) essentiellement de façon centrée.

4. Dispositif selon l'une des revendications 1 à 3, **caractérisé en ce que** le bras (50) de l'ancre de direction (30) qui dépasse de la partie de raccordement (40) est à peu près parallèle au vérin de direction (44) derrière les colonnes de pivotement (34) vu à partir de la partie de raccordement (40), et est, à l'extrémité libre, raccordé de façon articulée à un vérin de direction (44) unique.

5. Dispositif selon l'une des revendications 1 à 4, **caractérisé en ce que**, dans la zone du bras (50) dépassant de la partie de raccordement (40), l'ancre de direction (30) comporte, des deux côtés, des évidements (52, 54), tournés vers les colonnes de pivotement (34), qui sont adaptés au rayon des colonnes de pivotement (34) .

6. Dispositif selon l'une des revendications 1 à 5, **caractérisé en ce que** le bras (50) dépassant de la partie de raccordement (40) présente une largeur qui se situe dans la plage de 0,5 à 0,97 fois, de préférence de 0,75 à 0,95 fois, la différence entre la distance des axes de pivotement (38) et le double du rayon des colonnes de pivotement (34).

7. Dispositif selon l'une des revendications 1 à 6, **caractérisé en ce que** les leviers de direction (36) sont disposés, par rapport au sens de la marche, avec différentes positions angulaires sur les colonnes de pivotement (34) de telle sorte qu'il résulte des angles de braquage maximaux différents pour une direction de braquage vers la droite ou vers la gauche.

8. Dispositif selon l'une des revendications 1 à 7, **caractérisé en ce que** les colonnes de pivotement (34) au moins de l'essieu avant (6) sont supportées dans une traverse (56)

9. Dispositif selon la revendication 8, **caractérisé en ce que** le point fixe (42) du vérin de direction (44) est disposé sur le cadre de machine (4) ou sur la traverse (56) .

10. Dispositif selon la revendication 8 ou 9, **caractérisé en ce que** la traverse (56) peut pivoter autour d'un axe oscillant placé dans le sens de la marche par rapport au cadre de machine (8).

11. Dispositif selon l'une des revendications 1 à 10, **caractérisé en ce que** les roues (10, 12) ou les chenilles de l'essieu avant sont disposées de façon décalée entre elles dans le sens de la marche.

12. Dispositif selon la revendication 11, **caractérisé en ce que** la roue (10, 12) ou la chenille, côté intérieur dans la direction de braquage, ou la roue (10, 12) ou la chenille de l'essieu avant, située sur le côté zéro, est disposée avant la roue (10, 12) ou la chenille voisine dans le sens de la marche.

13. Dispositif selon la revendication 12, **caractérisé en ce que** la traverse (56) peut pivoter autour d'un axe vertical.

14. Dispositif selon l'une des revendications 1 à 13, **caractérisé en ce que** la roue (16) arrière située sur le côté zéro (24) peut, à partir d'une position extrême (26) extérieure dans laquelle la roue (16) se trouve au-delà du côté zéro (24) et les essieux arrière (7) des deux roues arrière (14, 16) affleurent essentiellement l'un avec l'autre, pivoter vers l'intérieur vers une position extrême intérieure devant le tambour de fraisage (20) et par rapport au côté zéro (24).

15. Procédé destiné à diriger une machine à fraiser la chaussée destinée au traitement de surfaces de routes ou de sols,
- avec un essieu avant et un essieu arrière (6, 7) avec des roues (10, 12, 14, 16) ou des chenilles,
- avec un tambour de fraisage (20) supporté en rotation entre les roues arrière (14, 16) ou chenilles, le tambour de fraisage (20) se terminant par un côté frontal presque en affleurement avec un côté extérieur latéral du cadre de machine (8), appelé côté zéro (24), pour permettre un fraisage le plus rapproché possible le long d'obstacles,
- au moins les roues (14, 16) ou les chenilles de l'essieu arrière (7) comportant des consoles de roues avec des colonnes de levage (48) qui sont réglables en hauteur pour le réglage de la profondeur de fraisage par rapport au cadre de machine (8),
- au moins les roues (10, 12) ou chenilles de l'essieu avant (6) étant dirigées autour d'un axe de pivotement (38) à l'aide de leviers de direction (36),
- par le fait que les leviers de direction (36) des roues (10, 12) ou des chenilles sont couplés les uns avec les autres de façon articulée par le biais d'une partie de raccordement (40) rigide pour le réglage synchrone des angles de braquage, et
- les angles de braquage des roues (10, 12) ou des chenilles étant réglés par le biais d'au moins un vérin de direction (44) articulé directement ou indirectement sur un point fixe (42) par rapport au cadre de machine et couplé indirectement ou directement avec la partie de raccordement (40),
**caractérisé en ce que**,
pour augmenter les angles de braquage des roues (10, 12) ou des chenilles de l'essieu avant (6) pouvant être réglés au maximum, il est utilisé une ancre de direction (30) formée par la partie de raccordement (40) conjointement avec un bras (50) dépassant de la partie de raccordement (40), ancre dont le bras (50) s'étend entre les colonnes de pivotement (34) et est couplé par son extrémité libre avec au moins un vérin de direction (44), la partie de raccordement (40) et le vérin de direction (44) étant disposés, vu dans le sens de marche, sur des côtés opposés par rapport à la ligne de raccordement des axes de pivotement (38).
